# EUROPEAN PATENT SPECIFICATION

(11) **EP 0 732 265 B1**
(45) Date of publication and mention of the grant of the patent: **21.10.1998**
(21) Application number: 96200670.6
(22) Date of filing: 12.03.1996
(51) Int. Cl.: B65B 23/06

(54) **Apparatus for orienting eggs on a second conveyor with their points to one side**
Vorrichtung zum Orientieren von Eiern mit ihren Spitzen nach einer Seite auf einem Sekundärförderer
Dispositif pour orienter des oeufs sur un convoyeur secondaire avec leurs pointes dirigées vers un côté

(30) Priority: 13.03.1995 NL 9500496
(43) Date of publication of application: 18.09.1996
(73) Proprietor: FPS Food Processing Systems B.V., NL-3771 VE Barneveld (NL)
(72) Inventor: Doornekamp, Martin, 3862 LP Nijkerk (NL); van Veldhuisen, Willem, 6741 EB Lunteren (NL); de Greef, Willem Marius, 6741 CK Lunteren (NL)
(74) Representative: Smulders, Theodorus A.H.J., Ir.

(56) References cited:
- GB-A- 1 029 661
- GB-A- 1 081 508
- NL-C- 132 757

## Description

The invention relates to an apparatus for transferring eggs from a first roller conveyor to a second conveyor, with an orienting operation taking place during the transfer so that the eggs on the second conveyor are all oriented with their points to one side, the rollers of the first roller conveyor being substantially hourglass-shaped and comprising a roller center part which is substantially cylindrical, the apparatus comprising pre-orienting means for bringing the eggs on the first roller conveyor into a pre-oriented position.

Such an apparatus is known from NL-A-0,132,757 or, for instance, EP-A-0,512,585. The most important drawback of the known apparatuses is formed by the relatively limited processing capacity thereof. The known apparatuses have a processing capacity of approximately 6,500 eggs per hour per conveying track. This capacity is limited inter alia because during the transfer from the first roller conveyor to the second conveyor, the eggs make a falling motion ending on a roller of the second conveyor which is in both cases also constructed as a roller conveyor. Because this falling motion must not take place in an uncontrolled manner - as this would cause breakage to the egg at the end of the falling motion -, the falling motion is braked. This results in a deceleration of the processing rate and, accordingly, in the above-mentioned relatively low processing capacity.

Another drawback of the known apparatuses is that the first conveyor and the second conveyor are located at different levels, because the egg should make a falling motion between these two conveyors. Hence, the installation space, in particular the installation height, required for the known apparatus is greater than is desired in some cases.

Still another drawback of the known apparatuses is that during the transfer from the first roller conveyor to the second conveyor, the performance of additional operations to the eggs, such as for instance weighing or blood detection, is not possible. Moreover, during the transfer from the first roller conveyor to the second conveyor, it is not possible to discharge eggs from the conveying track on the basis of some selecting criterion, such as for instance weight.

The object of the invention is to provide an apparatus without the above-described drawbacks and having an extremely high capacity.

To this end, the apparatus of the type mentioned in the preamble is characterized in that it comprises a transfer conveyor having grippers which are each adapted to pick up an egg from the pre-oriented position, the grippers being adapted to bring the eggs into an aligned position and to transfer the eggs from the aligned position to the second conveyor.

With a thus designed apparatus for transferring and orienting eggs, it is provided that after the pre-orienting operation, the further aligning operations are performed by the grippers in a positive manner. As these further aligning operations are performed in a positive manner, this can take place at a high speed, which has a favorable effect on the processing capacity of the apparatus. With the apparatus according to the invention, a capacity of 17,000 per hour per conveying track can be achieved without any problems. Hence, the processing capacity is about two and a half times as great as the processing capacity of the known apparatuses.

Because the transfer operation takes place entirely in a positive manner and the egg nowhere makes an uncontrolled motion, such as for instance a falling motion, the risk of breakage occurring during the transfer and the orienting operation is minimized.

Further elaborations of the invention are described in the subclaims and will be specified on the basis of two exemplary embodiments, with reference to the accompanying drawings, wherein:

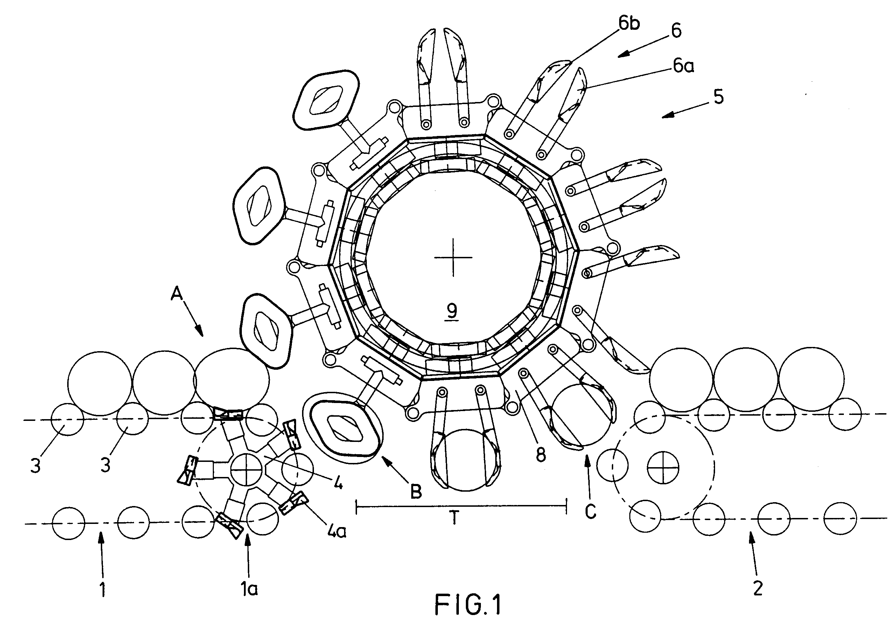

Fig. 1 is a side elevation of a first exemplary embodiment;
Fig. 2 is a top plan view of the exemplary embodiment shown in Fig. 1, with the transfer conveyor left out;
Fig. 3 is a partial side elevation of an exemplary embodiment having orienting pins;
Fig. 4 is a partial top plan view of the exemplary embodiment shown in Fig. 3;
Fig. 5 is a top plan view of a lifting element of the return wheel of the first roller conveyor;
Fig. 6 shows a line VI-VI of Fig. 5;
Fig. 7 is a side elevation of the lifting element, viewed in the direction of the arrow VII of Fig. 5;
Fig. 8 is a side elevation of a second exemplary embodiment; and
Fig. 9 is a developed view of the circumference of the transfer conveyor.

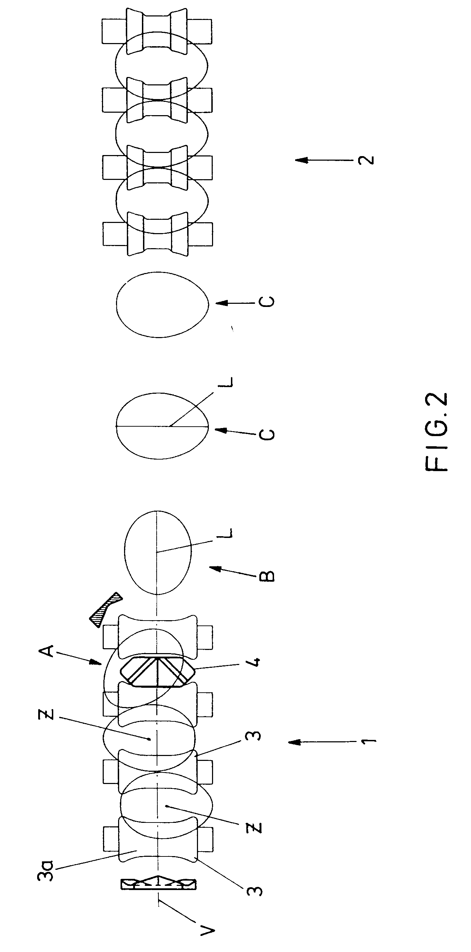

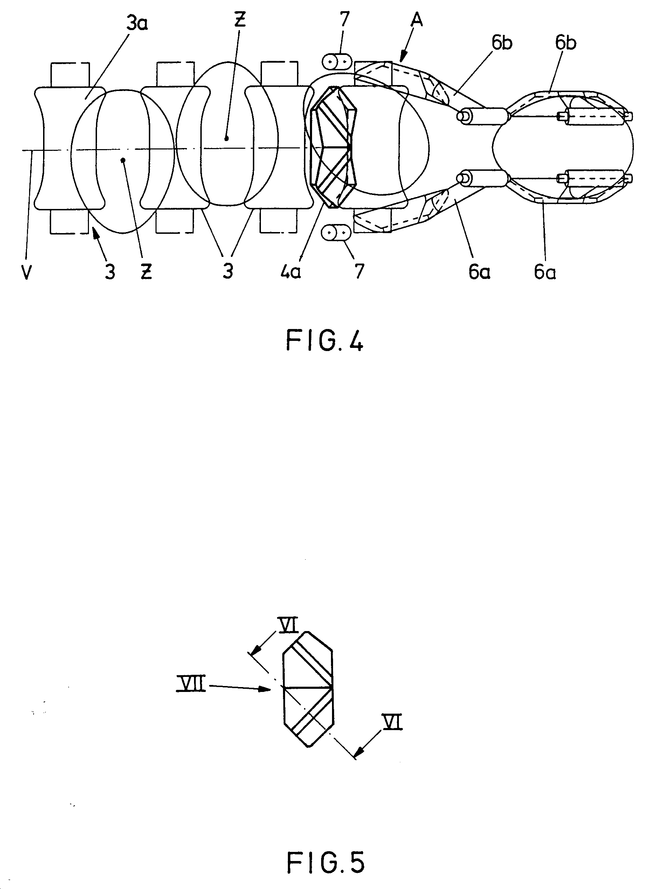

All exemplary embodiments shown concern apparatuses for transferring eggs from a first roller conveyor 1 to a second conveyor 2, with an orienting operation taking place during the transfer, so that the eggs on the second conveyor 2 are all oriented with their points to one side. The rollers 3 of the first roller conveyor 1 are substantially hourglass-shaped and comprise a roller center part 3a which is substantially cylindrical. The rollers 3 of the first roller conveyor 1 rotate during their travel. Because an egg located between two rotating cylindrical rollers 3 will move in the direction of the point of the egg relative to the rollers 3, the eggs on the first roller conveyor 1 will shift with their points towards the outer side of the roller conveyor 1, owing to the presence of the substantially cylindrical roller center part 3a. This phenomenon is clearly shown in Figs. 2 and 4. The position of the center of gravity Z of the egg relative to the plane V intersecting the hourglass-shaped rollers 3 perpendicularly through the center depends on the position of the egg, in particular the side to which the point of the egg is oriented. The apparatus further comprises pre-orienting means 4, adapted to bring the eggs on the first roller conveyor 1 into a pre-oriented position A.

All exemplary embodiments shown in the Figures are characterized in that they comprise a transfer conveyor 5 having grippers 6 which are each adapted to pick up an egg from the pre-oriented position A. The grippers 6 are adapted to bring the eggs into an aligned position C and to transfer the eggs from the aligned position C to the second conveyor 2.

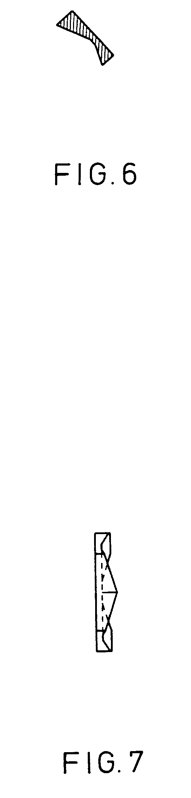

In the exemplary embodiments shown, the pre-orienting means 4 are designed as a return wheel 4 having saddle-shaped lifting elements 4a, shown in detail in Figs. 5-7. The lifting elements 4a are adapted to move in each case between two successive rollers 3 of the conveyor 1 at the discharge end la of the first roller conveyor 1, while lifting an egg located between the two successive rollers 3. The saddle-shaped lifting elements 4a are designed so that the eggs, when being lifted by a lifting element 4a, are always rotated with the same end in the conveying direction of the first roller conveyor 1 and brought into the pre-oriented position A. The saddle-shaped section of the lifting element 4a, clearly shown in Fig. 7, effects, depending on the position of the center of gravity Z of the egg relative to the highest point of the saddle-shaped lifting element 4a, a rotation of the egg such that the butt end of the egg is turned in the conveying direction of the first conveyor 1.

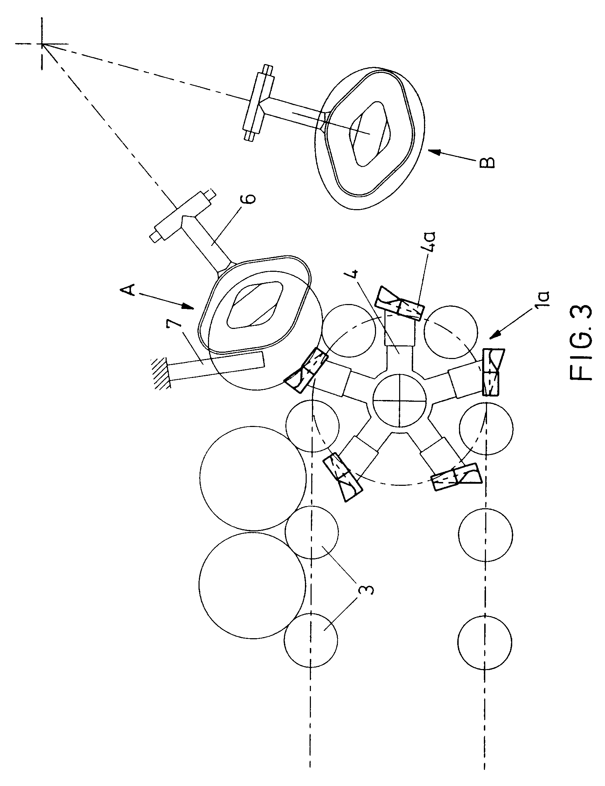

In some cases, it may occur that the lifting element 4a does not bring the egg to be oriented into the pre-oriented position A completely. In order to bring the egg as yet into the pre-oriented position A in such cases, in accordance with a further elaboration of the invention, shown in Figs. 3 and 4, the apparatus can be provided with two orienting pins 7 arranged adjacent the return wheel 4 on both sides of the first roller conveyor 1. The orienting pins 7 are designed and positioned so that eggs which are not yet completely in the pre-oriented position A, are brought into the pre-oriented position A by the orienting pins 7.

Preferably, each gripper 6 of the transfer conveyor 5 comprises two gripper parts 6a, 6b, which, when an egg is being picked up, bring the egg from the pre-oriented position A into an intermediate position B through closure of the gripper parts 6a, 6b, in which intermediate position B the longitudinal axis L of the egg lies in a plane V intersecting the axes of rotation of the rollers 3 of the first roller conveyor 1 perpendicularly through the center. At the moment when the eggs are located in a gripper 6, they all have the same orientation and can optionally be brought from this intermediate position B into an aligned position C. For instance, the aligned position C may be displaced 90° relative to the intermediate position B.

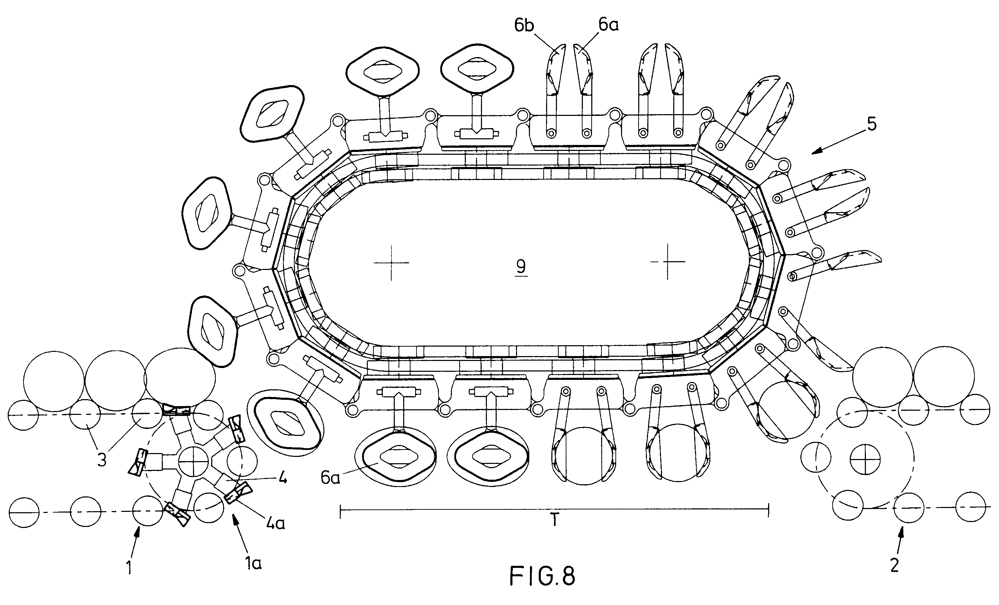

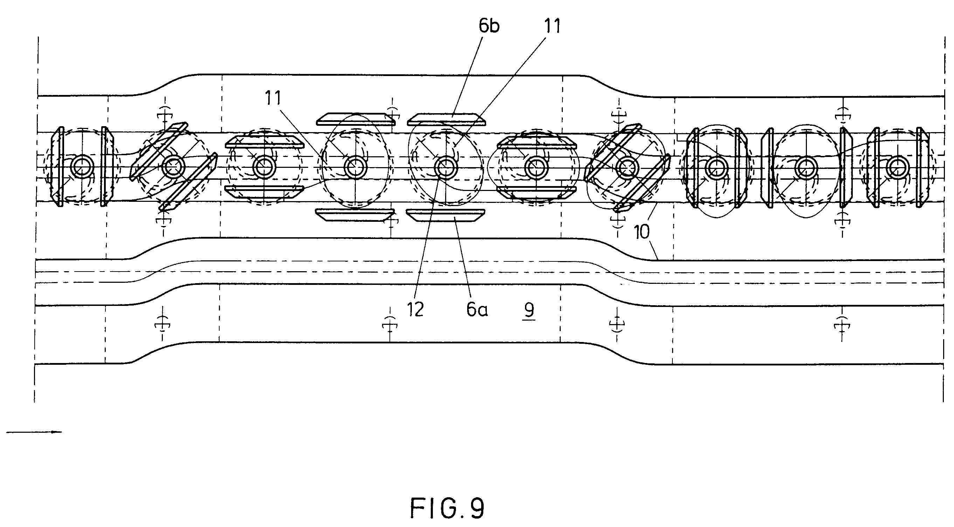

For this purpose, in accordance with the invention, the grippers 6 may be arranged for rotation through an angle of at least 90°, enabling the eggs to be brought from the intermediate position B into the aligned position C. In the exemplary embodiments shown, the grippers 6 are connected to an endless chain 8 which is guided around a stationary bush or drum 9 having a cam track 10. Each gripper 6 comprises a cam 11 which cooperates with the cam track 10 and by means of which the rotative position of the gripper 6 is controllable. Fig. 9 shows, in a developed view, the bush or drum 9 wherein the gripper 6 is projected in a number of successive positions in one of the cam tracks 10. The cam 11 is eccentrically connected to the rotary shaft 12 of the gripper 6. The rotary shaft 12 of the gripper 6 moves along a straight path, in a developed view, whereas the cam track 10 imposes a curved path on the cam 11, so that when the path is being traversed, the rotative position of the gripper 6 is controlled by the cam track 10. The bush or drum 9 may be of a cylindrical design, but may also be designed in the manner as shown in Fig. 8. Such a box-shaped drum 9 with rounded corners provides a slightly longer transferring-conveying track T between the first roller conveyor 1 and the second conveyor 2. This provides the space for arranging means in this track for performing at least one operation on a passing egg, such as for instance weighing means for weighing a passing egg, or detection means for detecting foul or blood. In this manner, the apparatus may not only serve to orient the eggs with their points to one side, but also to determine specific properties of the passing eggs.

Another possibility which is provided when the transferring-conveying track T has a certain length is that a third discharge conveyor is disposed between the first roller conveyor 1 and the second conveyor 2, which third discharge conveyor will generally extend perpendicularly to the first and the second conveyor 1, 2. To the discharge conveyor, eggs can for instance be delivered which, on the basis of a certain selection criterion, are not considered suitable for further processing or which are to be discharged for other reasons. As is clearly shown in the Figures, in all exemplary embodiments the first conveyor 1 and the second conveyor 2 are in line, which has a favorable effect on the installation height required for the apparatus.

## Claims

1. An apparatus for transferring eggs from a first roller conveyor (1) to a second conveyor (2), with an orienting operation taking place during the transfer, so that the eggs on the second conveyor (2) are all oriented with their points to one side, the rollers (3) of the first roller conveyor being substantially hourglass-shaped and comprising a roller center part (3a) which is substantially cylindrical, the apparatus comprising pre-orienting means (4) for bringing the eggs on the first roller conveyor (1) into a pre-oriented position (A), **characterized in that** the apparatus comprises a transfer conveyor (5) having grippers (6) which are each adapted to pick up an egg from the pre-oriented position (A), the grippers (6) being adapted to bring the eggs into an aligned position (C) and to transfer the eggs from the aligned position (C) to the second conveyor (2).

2. An apparatus according to claim 1, characterized in that the pre-orienting means (4) are designed as a return wheel (4) comprising saddle-shaped lifting elements (4a) which are adapted to move in each case between two successive rollers (3) of the conveyor (1) at the discharge end of the first roller conveyor (1) while lifting an egg located between the two successive rollers (3), the saddle-shaped lifting elements (4a) being designed so that the eggs, when they are lifted by a lifting element (4a), are always rotated with the same end in the conveying direction of the first roller conveyor (1) and brought into the pre-oriented position (A).

3. An apparatus according to claim 1 or 2, characterized in that on both sides of the first roller conveyor (1), adjacent the return wheel (4), an orienting pin (7) is provided, said orienting pins (7) being designed and positioned so that eggs which are not yet completely in the pre-oriented position (A) are brought into the pre-oriented position (A) by the orienting pins (7).

4. An apparatus according to any one of the preceding claims, characterized in that each gripper (6) comprises two gripper parts (6a, 6b), which, when an egg is being picked up, bring the egg from the pre-oriented position (A) into an intermediate position (B) through closure of the gripper parts (6a, 6b), in which intermediate position (B) the longitudinal axis (L) of the egg lies in a plane (V) intersecting the axes of rotation of the rollers (3) of the first conveyor (1) perpendicularly through the center.

5. An apparatus according to claim 4, characterized in that the grippers (6) are arranged for rotation at least through 90°, enabling the eggs to be brought from the intermediate position (B) into the aligned position (C).

6. An apparatus according to claim 5, characterized in that the grippers (6) are connected to an endless chain (8) guided around a stationary bush or drum (9) provided with a cam track (10), each gripper (6) comprising a cam (11) which cooperates with the cam track (10) and by means of which the rotative position of the gripper (6) is controllable.

7. An apparatus according to any one of the preceding claims, characterized in that the first conveyor (1) and the second conveyor (2) are in line.

8. An apparatus according to any one of the preceding claims, characterized in that in the transferring-conveying track (T) between the first roller conveyor (1) and the second conveyor (2), means are present for performing at least one operation on a passing egg, such as for instance weighing means for weighing, detection means for detecting foul or blood.

9. An apparatus according to any one of the preceding claims, characterized in that connecting to the transferring-conveying track (T) between the first roller conveyor (1) and the second conveyor (2) is a third discharge conveyor on which eggs can be delivered on the basis of a certain selection criterion.

## Patentansprüche

1. Vorrichtung zur Überführung von Eiern von einem ersten Rollenförderer (1) auf einen zweiten Förderer (2), wobei während der Überführung ein Orientierungsvorgang stattfindet, so daß die Eier auf dem zweiten Förderer (2) sämtlich mit ihrer Spitze nach einer Seite orientiert sind, wobei die Rollen (3) des ersten Rollenförderers im wesentlichen sanduhrförmig gestaltet sind und einen im wesentlichen zylindrischen Rollenmittelteil (3a) aufweisen, und wobei die Vorrichtung Vororientierungsmittel (4) aufweist, mittels deren die Eier auf dem ersten Rollenförderer (1) in eine vororientierte Position (A) bringbar sind, **dadurch gekennzeichnet,** daß die Vorrichtung einen Überführungsförderer (5) mit Greifern (6) umfaßt, mittels deren ein Ei aus der vororientierten Position (A) aufnehmbar ist, wobei mittels der Greifer die Eier in eine ausgerichtete Position (C) bringbar und die Eier aus der ausgerichteten Position (C) auf dem zweiten Förderer (2) überführbar sind.

2. Vorrichtung nach Anspruch 1, **dadurch gekennzeichnet,** daß die Vororientierungsmittel (4) als Umlenkrad (4) mit sattelförmigen Hubelementen (4a) ausgestaltet sind, die an dem Abgabeende des ersten Rollenförderers (1) jeweils zwischen zwei aufeinanderfolgende Rollen (3) des Förderers (1) bewegbar sind und dabei ein zwischen den aufeinanderfolgenden Rollen (3) befindliches Ei anheben, wobei die sattelförmigen Hubelemente (4a) so gestaltet sind, daß die Eier beim Anheben durch ein Hubelement (4a) stets mit dem gleichen Ende in die Förderrichtung des ersten Rollenförderers (1) gedreht und in die vororientierte Position (A) gebracht werden.

3. Vorrichtung nach Anspruch 1 oder 2, **dadurch gekennzeichnet,** daß auf beiden Seiten des ersten Rollenförderers (1) nahe bei dem Umlenkrad (4) ein Orientierungsstift (7) vorgesehen ist, wobei die Orientierungsstifte (7) so gestaltet und angeordnet sind, daß noch nicht vollständig in der vororientierten Position (A) befindliche Eier durch die Orientierungsstifte (7) in die vororientierte Position (A) gebracht werden.

4. Vorrichtung nach einem der vorangehenden Ansprüche, **dadurch gekennzeichnet,** daß jeder Greifer (6) zwei Greiferteile (6a,6b) umfaßt, die beim Aufnehmen eines Eis das Ei aus der vororientierten Position (A) durch das Schließen der Greiferteile (6a,6b) in eine mittlere Position (B) bringen, in welcher mittleren Position (B) die Längsachse (L) des Eis in einer Ebene (V) liegt, die die Drehachsen der Rollen (3) des ersten Förderers (1) senkrecht im wesentlichen durch die Mitte schneiden.

5. Vorrichtung nach Anspruch 4, **dadurch gekennzeichnet,** daß die Greifer (6) um mindestens 90° drehbar sind, so daß die Eier aus der mittleren Position (B) in die ausgerichtete Position (C) bringbar sind.

6. Vorrichtung nach Anspruch 5, **dadurch gekennzeichnet,** daß die Greifer (6) mit einer endlosen Kette (8) verbunden sind, die um eine stationäre Buchse oder Trommel (9) geführt ist, und jeder Greifer (6) einen mit der Nockenführungsspur (10) zusammenwirkenden Nocken (11) aufweist, durch welchen die Drehstellung des Greifers steuerbar ist.

7. Vorrichtung nach einem der vorangehenden Ansprüche, **dadurch gekennzeichnet,** daß der erste Förderer (1) und der zweite Förderer (2) in einer Linie angeordnet sind.

8. Vorrichtung nach einem der vorangehenden Ansprüche, **dadurch gekennzeichnet,** daß in dem Übergabe-Förderweg (T) zwischen dem ersten Rollenförderer (1) und dem zweiten Förderer (2) Mittel zur Ausführung mindestens einer Operation an einem vorbeifahrenden Ei vorhanden sind, beispielsweise Wägemittel zum Wägen oder Detektionsmittel zur Detektion von Faulstellen oder Blut.

9. Vorrichtung nach einem der vorangehenden Ansprüche, **dadurch gekennzeichnet,** daß an die Überführungs-Förderstrecke (T) zwischen dem ersten Rollenförderer (1) und dem zweiten Förderer (2) ein dritter Ausschleusförderer angeschlossen ist, auf welchen auf der Basis eines bestimmten Selektionskriteriums Eier aufgebbar sind.

## Revendications

1. Appareil pour transférer des oeufs d'un premier transporteur à rouleaux (1) vers un second transporteur (2), avec une opération d'orientation ayant lieu pendant le transfert, de sorte que les oeufs sur le second transporteur (2) sont tous orientés avec leurs pointes d'un côté, les rouleaux (3) du premier transporteur à rouleaux étant sensiblement conformés en sablier et comprenant une partie centrale de rouleau (3a) qui est sensiblement cylindrique, l'appareil comprenant des moyens de pré-orientation (4) pour amener les oeufs sur le premier transporteur à rouleaux (1) dans une position pré-orientée (A),
caractérisé en ce que l'appareil comprend un transporteur de transfert (5) ayant des dispositifs de préhension (6) qui sont chacun adaptés pour prélever un oeuf à partir de la position pré-orientée (A), les dispositifs de préhension (6) étant adaptés pour amener les oeufs dans une position alignée (C) et pour transférer les oeufs de la position alignée (C) vers le second transporteur (2).

2. Appareil selon la revendication 1,
caractérisé en ce que les moyens de pré-orientation (4) sont conçus comme une roue de rappel (4) comprenant des éléments de levage en forme de selle (4a) qui sont adaptés pour se déplacer dans chaque cas entre deux rouleaux successifs (3) du transporteur (1) à l'extrémité d'évacuation du premier transporteur à rouleaux (1), tout en soulevant un oeuf situé entre les deux rouleaux successifs (3), les éléments de levage en forme de selle (4a) étant conçus de sorte que les oeufs, quand ils sont soulevés par un élément de levage (4a), sont toujours tournés avec la même extrémité dans la direction de transport du premier transporteur à rouleaux (1) et amenés dans la position pré-orientée (A).

3. Appareil selon la revendication 1 ou 2,
caractérisé en ce que sur les deux côtés du premier transporteur à rouleaux (1), adjacente à la roue de rappel (4), est prévue une broche d'orientation (7), lesdites broches d'orientation (7) étant conçues et positionnées de sorte que les oeufs, qui ne sont pas encore complètement dans la position pré-orientée (A), sont amenés dans la position pré-orientée (A) par les broches d'orientation (7).

4. Appareil selon l'une quelconque des revendications précédentes,
caractérisé en ce que chaque dispositif de préhension (6) comprend deux parties de préhension (6a,6b) qui, quand un oeuf doit être prélevé, amènent l'oeuf de la position pré-orientée (A) dans une position intermédiaire (B) par la fermeture des parties de préhension (6a,6b), dans laquelle position intermédiaire (B), l'axe longitudinal (L) de l'oeuf s'étend dans un plan (V) coupant les axes de rotation des rouleaux (3) du premier transporteur (1) perpendiculairement par le centre.

5. Appareil selon la revendication 4,
caractérisé en ce que les dispositifs de préhension (6) sont agencés pour tourner au moins de 90°, permettant aux oeufs d'être amenés de la position intermédiaire (B) dans la position alignée (C).

6. Appareil selon la revendication 5,
caractérisé en ce que les dispositifs de préhension (6) sont reliés à une chaîne sans fin (8) guidée autour d'une douille ou d'un tambour fixe (9) ayant une piste à came, chaque dispositif de préhension (6) comportant une came (11) qui coopère avec la piste à came (10) et par l'intermédiaire de laquelle la position rotative du dispositif de préhension (6) est commandable.

7. Appareil selon l'une quelconque des revendications précédentes,
caractérisé en ce que le premier transporteur (1) et le second transporteur (2) sont alignés.

8. Appareil selon l'une quelconque des revendications précédentes,
caractérisé en ce que dans la voie de transfert-transport (T) entre le premier transporteur à rouleaux (1) et le second transporteur (2), des moyens sont présents pour réaliser au moins une opération sur un oeuf en train de passer, tels que par exemple des moyens de pesage pour peser, des moyens de détection pour détecter une odeur ou du sang.

9. Appareil selon l'une quelconque des revendications précédentes,
caractérisé en ce que la liaison vers la voie de transfert-transport (T), entre le premier transporteur à rouleaux (1) et le second transporteur (2), est un troisième transporteur d'évacuation sur lequel les oeufs peuvent être évacués sur la base d'un certain critère de sélection.
